# EUROPEAN PATENT SPECIFICATION

(11) **EP 3 495 210 B1**
(45) Date of publication and mention of the grant of the patent: **28.10.2020**
(21) Application number: 18210353.1
(22) Date of filing: 05.12.2018
(51) Int. Cl.: B60R 7/00, B60N 3/10, B60P 3/32

(54) **VEHICLE STORAGE COMPARTMENT**
FAHRZEUGAUFBEWAHRUNGSFACH
COMPARTIMENT DE STOCKAGE DE VÉHICULES

(30) Priority: 08.12.2017 GB 201720466
(43) Date of publication of application: 12.06.2019
(73) Proprietor: Ford Global Technologies, LLC, Dearborn, MI 48126 (US)
(72) Inventor: CARROLL, Ben, London, N16 8DL (GB); HOGGARTH, Marcus, St. Albans, Hertfordshire AL1 4EP (GB)
(74) Representative: Haseltine Lake Kempner LLP

(56) References cited:
- DE-A1- 19 947 177
- DE-A1-102005 012 314
- FR-A1- 2 908 363
- GB-A- 1 499 634
- JP-U- S6 428 345
- US-A- 5 029 935
- US-B1- 6 220 049

## Description

This disclosure relates to a vehicle comprising a storage compartment, and in particular, but not exclusively, relates to a passenger vehicle storage compartment that allows an article to be transferred between the inside of a passenger vehicle and the outside of the vehicle.

### Introduction

A vehicle, such as a car or a truck, typically has one or more storage compartments within a passenger compartment of the vehicle. An occupant of the vehicle can use the storage compartment to stow items of cargo, or everyday items, such as sunglasses, telephone and beverages.

In some cases, a storage compartment is located near to a seating position of the occupant in the vehicle. For example, the storage compartment may be provided in a seat of the vehicle, or at least partially within a body portion of the vehicle, such as a door or a bulkhead of the vehicle. However, it is common for the storage compartment to be accessible only from within the vehicle.

With the advent of electric and/or autonomous vehicles, an automotive manufacturer may look towards providing a customer with a subscription service to a fleet of vehicles, as opposed individual vehicle ownership. As such, the automotive manufacturer may seek offer the customer a more tailored service by stocking the vehicle with one or more items, such as beverages and snacks, which may be requested specifically by the customer.
It is desirable, therefore, to provide a vehicle storage compartment the can meet the needs of a changing vehicle ownership model.

DE19947177 (A1) discloses a car, especially a van, having a vehicle seat below which is provided a stowage device, The stowage device is arranged transversely to the travel direction and can be extended laterally outwards by means of guide rails located on the vehicle body.

GB1499634 discloses a vehicle according to the preamble of claim 1, especially a security vehicle, having a secure compartment, within which there is a hollow housing comprising at least two subcompartments and a rotatable member within said housing.

### Statements of Invention

According to an aspect of the present disclosure there is provided a vehicle comprising a storage compartment that is movable between a first position, e.g. in which the storage compartment can be accessed from outside of the vehicle, and a second position, e.g. in which the storage compartment can be accessed from inside of the vehicle. The storage compartment may be provided in a body portion of the vehicle, e.g. in a portion of a body panel, a door, a roof, and/or a floor of the body of the vehicle. The storage compartment may be configured to stow one or more articles, such as cargo, parcels, luggage, mobile computing devices, beverages and/or snacks.

The vehicle may comprise a first access port configured to allow access to the storage compartment from outside of the vehicle when the storage compartment is in the first position. The first access port may be an opening in an exterior panel of the vehicle body. The storage compartment comprises a cover, e.g. a door, configured to close the first access port.

The vehicle may comprise a second access port configured to allow access to the storage compartment from inside of the vehicle when the storage compartment is in the second position. The second access port may be an opening in an interior panel of the vehicle body. The storage compartment comprises a cover, e.g. a door, configured to close the second access port.

The storage compartment may comprise a carriage that is moveably, e.g. slidably and/or rotationally, coupled to a body portion of the vehicle. The carriage may be moveable between the first position and the second position, i.e. the carriage may be configured to move from the first position to the second position, and from the second position to the first position. The carriage may be operatively coupled to at least one actuator configured to move the carriage.

The carriage may be configured to carry articles between the first and second access ports. For example, the carriage may comprise one or more sections, e.g. subcompartments of the storage compartment, configured to stow one or more articles, which an occupant of the vehicle may wish to use during a journey.

The carriage may be configured to close at least one of the first and second access ports. The carriage comprises a cover configured to close at least one of the second access port when the carriage is in the first position and the first access port when the carriage is in the second position.

The carriage may be movable to a position where it extends through at least one of the first and second access ports.

The storage compartment may comprise at least one barrier configured to prevent access between the outside the vehicle and the inside the vehicle. For example, the storage compartment may comprise a barrier positioned between the first and second access ports, the barrier being configured to prevent access through the storage compartment into the vehicle, e.g. when the first and second access ports are open. The barrier may be provided on the carriage. The barrier may be configured to partition the storage compartment into a plurality of sections, e.g. at least a first section and a second section. The first section of the storage compartment may be accessible from the first access port when the carriage is in the first position. The first section of the storage compartment may be accessible from the second access port when the carriage is in the second position. The second section of the storage compartment may be accessible from the second access port when the carriage is in the first position. The second section of the storage compartment may be accessible from the first access port when the carriage is in the second position.

The carriage may comprise a cover configured to close at least one of the sections of the carriage, e.g. at least one of the first and second sections of the storage compartment.

The storage compartment comprises cover, e.g. a cover configured to close the first access port, the second access port and/or at least one of the sections of the carriage, the cover will be lockable. The cover will also comprise a lock that can be locked and unlocked by virtue of an application on a mobile computing device, e.g. a smartphone.

At least a portion of the storage compartment may be configured to be heated and/or refrigerated.

According to another aspect of the present disclosure there is provided a method of accessing a storage compartment of a vehicle, the method comprising: moving the storage compartment between a first position, e.g. in which can be accessed from outside of the vehicle, and a second position, e.g. in which the storage compartment can be accessed from inside of the vehicle.

According to another aspect of the present disclosure there is provided a vehicle storage compartment comprising a first access port configured to allow access to the storage compartment from outside of the vehicle; a second access port configured to allow access to the storage compartment from inside of the vehicle; and a barrier configured to prevent access through the storage compartment between outside the vehicle and inside the vehicle when the first and second access ports are open.

According to another aspect of the present disclosure there is provided a vehicle having a storage compartment that is accessible from the outside of the vehicle and the inside of the vehicle, the vehicle storage compartment comprising a movable barrier, e.g. that is internal to the storage compartment, configured to prevent access from the outside of the vehicle to the inside of the vehicle through the storage compartment.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figures 1a and 1b show a vehicle storage compartment in first and second operational states respectively;
Figure 2 shows a schematic of another vehicle storage compartment;
Figure 3 shows a schematic of another vehicle storage compartment; and
Figure 4 shows a schematic of another vehicle storage compartment.

### Detailed Description

The present disclosure provides a vehicle having a storage compartment 101 that is configured such that it can be accessed from outside of the vehicle and from inside of the vehicle. In particular, the storage compartment 101 of the vehicle is moveable between a first position in which the storage compartment can be accessed, e.g. accessed only, from outside of the vehicle, and a second position in which the storage compartment can be accessed, e.g. accessed only, from inside of the vehicle.

In the context of the present disclosure, the vehicle may be any type of vehicle, such a car, a van, a truck, a marine vessel or an aircraft. However, the present disclosure may be particularly suited for use in a passenger vehicle, such an autonomous, or semi-autonomous, vehicle.

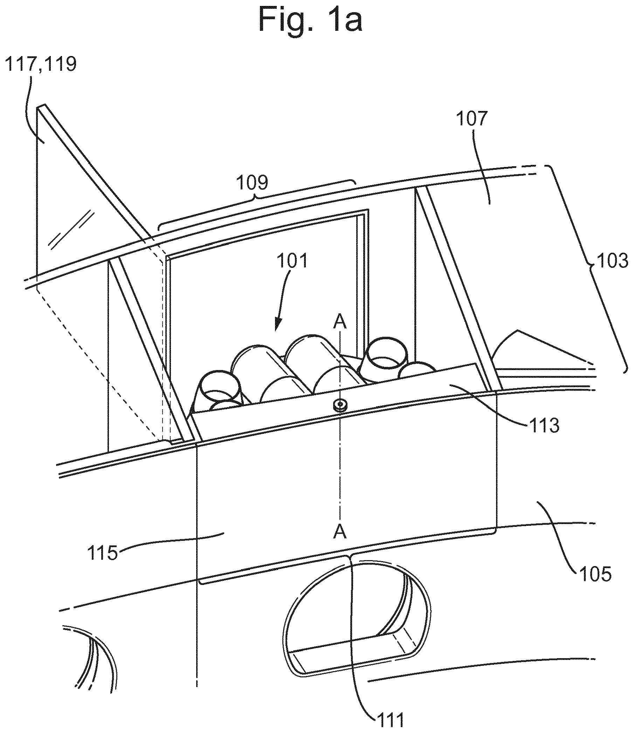

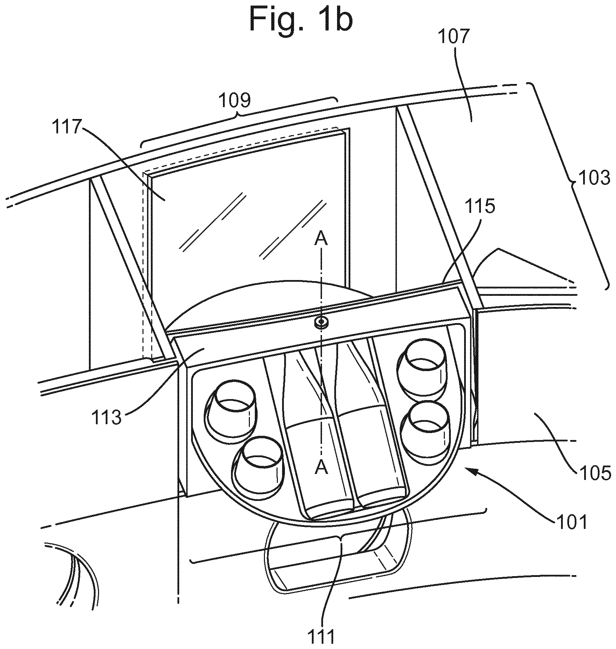

Figures 1a and 1b show a partial cross section through a body portion 103 of a vehicle with the storage compartment 101 in first and second operational positions respectively. The body portion 103 of the vehicle may be any appropriate part of the vehicle. For example, the body portion 103 may comprise at least apportion of a wall, a bulkhead, a door, a roof and/or a floor of the vehicle.

In the arrangement shown in figures 1a and 1b, the body portion 103 comprises a portion of a vehicle wall having an inner skin 105, which faces the inside of the vehicle, and an outer skin 107, which faces the outside of the vehicle. The inner skin 105 may comprise one or more interior panels/trim, and the outer skin 107 may be a painted exterior panel of the body of the vehicle, for example. As shown in figure 1a and 1b, the storage compartment 101 is provided on the vehicle such that it is disposed within the body portion 103 of the vehicle, e.g. in between the inner and outer skins 105, 107, when the storage compartment 101 is installed in the vehicle.

In order to access the storage compartment 101 from outside of the vehicle, the vehicle has a first access port 109 provided in the outer skin 107. The first access port 109 comprises one or more openings in the outer skin 107, such that the storage compartment 101 is accessible through the first access port 109 when the storage compartment 101 is in the first position.

In a similar manner, in order to access the storage compartment 101 from inside of the vehicle, the vehicle has a second access port 111 provided in the inner skin 105. The second access port 111 may comprise one or more openings in the inner skin 105, such that the storage compartment 101 is accessible through the second access port 111 when the storage compartment 101 is in the second position.

The storage compartment 101 may comprise a carriage 113 that is moveably coupled to the body portion 103 of the vehicle. For example, the storage compartment 101 may comprise a rotatable carriage that is able to move between the first and second positions by virtue of rotating about an appropriate point within the body portion 103 of the vehicle. In the arrangement shown in figures 1a and 1b, the carriage 113 is able to rotate such that the storage compartment 101 may be accessed through the first access port 109 when the carriage 113 is in a first rotational orientation (shown in figure 1a), and may be accessed through the second access port 111 when the carriage 113 is in a second rotational orientation (shown in figure 1b). Accordingly, the first and second access ports 109, 111 may be provided so as to face each other from respective sides of the body portion 103 of the vehicle to allow access to the carriage 113 when the carriage 113 the first and second rotational orientations respectively.

However, in one or more other arrangements (not shown), the carriage 113 may be moveably coupled to the body portion of the vehicle in any appropriate manner, and is not limited to being rotationally coupled to the body portion 103 of the vehicle in the manner illustrated in the accompanying figures. For example, where the first and second access port 109, 111 are provided at different locations on the vehicle, such as at forward and rearward positions respectively, the carriage 113 may be configured to slide and/or rotate in any number of degrees of freedom, in order to convey the carriage 113 between the first and second access ports 109, 111.

In the arrangement shown in figures 1a and 1b, the carriage 113 is configured to close the second access port 111 when the carriage 113 is in the first rotational orientation, and when the carriage 113 is in the second rotational orientation. For example, the carriage 113 may comprise a barrier 115 configured to close at least one of the first and second access ports 109, 111, in order to prevent access into the vehicle through the storage compartment. The barrier 115 comprises a portion of the inner skin 105 of the vehicle, such that the barrier 115 faces the passenger compartment of the vehicle when the carriage 113 is in the first rotational orientation. In this manner, a passenger within the vehicle may not be able to discern the location, or presence, of the storage compartment 101, since the storage compartment 101 is integrated into the interior trim of the vehicle.

In the arrangement shown in figures 1a and 1b, the carriage 113 is rotationally coupled to the body portion 103 of the vehicle at a point close to, or at, the inner skin 105 of the vehicle (see axis AA). As such, upon rotation of the carriage 113 from the first rotational orientation to the second rotational orientation, the carriage 113 is caused to extend at least partially through the second access port 111, and into the passenger compartment of the vehicle. In this manner, a passenger in the vehicle may more easily access the articles carried by the carriage 113.

In another arrangement (not shown), the carriage 113 may be moveably coupled to the body portion 103 so that it can be moved to a position where it extends at least partially through the first access port 109, in addition to or instead of the second access port 111. For example, the carriage 133 shown in figures 1a and 1b may be further configured to slide relative to the body portion 103 of the vehicle, so that the carriage may be caused to extend out of the first access port 109 when the carriage 113 is in the first rotational orientation, and/or further into the passenger compartment when the carriage 113 is in the second rotational orientation.

The carriage 113 may be configured to carry one or more articles, such as a bottle and/or a glass, as shown in figures 1a and 1b. In the arrangement shown in figures 1a and 1b, the carriage has a plurality of recesses each configured to receive a cup/glass, and another recess configured to receive at least one bottle. In this manner, the carriage 113 can serve as a drinks carrier that can be stocked from outside of the vehicle, and which can be accessed from within the passenger compartment of the vehicle for the purpose of dispensing the drinks. This is advantageous as it allows for the drinks carrier to be stocked without requiring access into the passenger compartment of the vehicle. Such a feature may be particularly advantageous when used in an autonomous vehicle fleet, which may require frequent re-stocking of consumable items, such as drinks and/or snacks, for consumption by passengers of the vehicle.

However, the carriage 113 may be configured to carry any appropriate type of cargo. For example, the carriage 113 may have a feature configured to hold/support one or more items of cargo, such as envelopes, parcels, magazines, luggage and/or any other appropriate item that an individual may wish to transfer between the outside and the inside of a vehicle.

The storage compartment 101 comprises at least one cover 117 configured to prevent access to the storage compartment 101. In the arrangement shown in figures 1a and 1b, the storage compartment 101 comprises a door 119 configured to close the first access port 109. However, the cover 117 may be any type of barrier that can be moved to close the first access port 109. In one arrangement, the cover 117 is provided with a lock, such that only those individuals with access permissions may be allowed to access the storage compartment 101. For example, the storage compartment 101 may be locked from outside of the vehicle so that only an authorised individual, such a delivery person, can access the storage compartment 101. Additionally or alternatively, the cover 117 may be locked so as to prevent a passenger of the vehicle from accessing the storage compartment 101 from the outside of the vehicle.

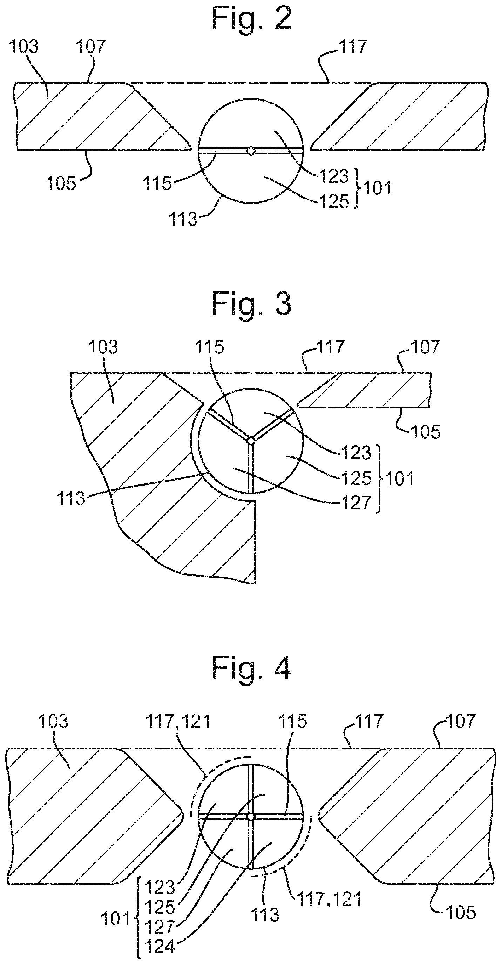

Figures 2 to 4 show various configurations of a storage compartment 101 according to the present disclosure. In each of the arrangements shown in figures 2 to 4, the storage compartment 101 is partitioned into a plurality of separate sections. For example, figure 2 shows a storage compartment 101 that is partitioned into a first section 123 and a second section 125. Figures 3 and 4 show similar storage compartments 101 comprising a third section 127, and third and fourth sections 127, 129, respectively. In each of the arrangements shown in figures 2 to 4, the carriage 113 comprises at least one barrier 115 configured to prevent access between each of the sections of the storage compartment 101, and to prevent access between the outside the vehicle and the inside the vehicle.

In the arrangement shown in figure 2, the carriage 113 of the storage compartment 101 is movable, e.g. rotatable, between the first position, which is shown in figure 2, and the second position, which is not shown, but is similar to the arrangement shown in figure 1b.
second position, which is not shown, but is similar to the arrangement shown in figure 1b.

When the carriage 113 is in the first position, the first section 123 of the storage compartment 101, e.g. only the first section 123 of the storage compartment 101, can be accessed from outside of the vehicle, and the second section of the storage compartment 101, e.g. only the second section 125 of the storage compartment 101, can be accessed from the inside of the vehicle. When the carriage 113 is in the first position, the first section 123 of the storage compartment 101 is located within, e.g. entirely within, the body portion 103 of the vehicle, and the second section 125 of the storage compartment 101 is located within, e.g. entirely within, the passenger compartment of the vehicle.

When the carriage 113 is moved to the second position, e.g. by rotating the carriage 113 by 180 degrees, the first section 123 of the storage compartment 101, e.g. only the first section 123 of the storage compartment 101, can be accessed from inside of the vehicle, and the second section 125 of the storage compartment 101, e.g. only the second section 125 of the storage compartment 101, can be accessed from the outside of the vehicle. When the carriage 113 is in the second position, the first section 123 of the storage compartment 101 is located within, e.g. entirely within, the passenger compartment of the vehicle, and the second section 125 of the storage compartment 101 is located within, e.g. entirely within, the body portion 103 of the vehicle.

The arrangement shown in figure 2 also comprises a cover 117 configured to close the access port 109 in the outer skin 107 of the vehicle. Additionally or alternatively, the storage compartment 101 may comprise one or more other covers 117 configured to close the access port 111 in the inner skin 105 of the vehicle, and/or at least one of the sections 123, 125 of the storage compartment 101.

The arrangement shown in figure 3 is similar to the arrangement shown in figures 1a, 1b and 2. However, in addition to the first and second sections 123, 125, the storage compartment 101 comprises a third section 127.

When the carriage 113 is in a first position, as shown in figure 3, the first section 123 is accessible from the outside of the vehicle, the second section 125 is accessible from the inside of the vehicle, and the third section 127 of the storage compartment 101 is not accessible from either of the outside of the vehicle or the inside of the vehicle. In this manner, the third section 127 is secured from access even when at least one of the other sections 123, 125 can be accessed.

When the carriage 113 is moved to a second position, e.g. by rotating the carriage 113 in a clockwise direction by 120 degrees, the first section 123 of the storage compartment 101 is moved to a position where it can be accessed from the inside of the vehicle, the third section 127 of the storage compartment 101 is moved to a position where it can be accessed from the outside of the vehicle, and the second section 125 is moved to a position where it is not accessible from either of the outside of the vehicle or the inside of the vehicle.

When the carriage 113 is moved to a third position, e.g. by rotating the carriage 113 in a clockwise direction by a further 120 degrees, the third section 127 of the storage compartment 101 is moved to a position where it can be accessed from the inside of the vehicle, the second section 125 of the storage compartment 101 is moved to a position where it can be accessed from the outside of the vehicle, and the first section 123 is moved to a position where it is not accessible from either of the outside of the vehicle or the inside of the vehicle.

The arrangement shown in figure 4 is similar to the arrangements shown in figures 1a to 3. However, in addition to the first, second and third sections 123, 125, 127, the storage compartment 101 comprises a fourth section 129.

For example, when the carriage 113 is in a first position, the first and second sections 123, 125 of the storage compartment 101, e.g. only the first and second sections 123, 125 of the storage compartment 101, can be accessed from outside of the vehicle, and the third and fourth sections 127, 129 of the storage compartment 101, e.g. only the third and fourth sections 127, 129 of the storage compartment 101, can be accessed from the inside of the vehicle. It can be appreciated, that the storage compartment 101 of figure 4 is movable in a similar manner to that of the previous arrangements, and the carriage 113 may be configured to move to any appropriate position to allow access to the sections 123, 125, 127, 129 of the storage compartment 101 as required. For example, the carriage 113 may be movable between one of four discrete rotational positions.

In the arrangement shown in figure 4, the carriage 113 comprises a cover 117 over each of the first section 123 and the fourth section 129. For example, the first section 123 and the fourth section 129 may each comprise a door 121 configured to prevent access to those sections of the storage compartment 101, even when the first and second access ports 109, 111 are open.

In each of the above arrangements, the storage compartment 101 may be configured to allow the carriage 113 to move continuously along a single path, e.g. without changing direction. For example, the carriage 113 may be configured such that it can rotate in a first direction from a first position to a second position (or one or more further positions), and continue to rotate in the first direction to return the carriage 113 to the first position. However, in another arrangement, the storage compartment 101 may be configured to prevent the carriage 113 from returning to the first position without changing direction. For example, the storage compartment 101 may be configured to prevent the carriage 113 moving past the second position (and/or one or more further positions) when travelling in a first direction, the carriage 113 being returned to the first position by travelling in a direction opposite to the first direction. For example, the storage compartment 101 may comprise one or more stops configured to limit the movement of the carriage 113 in one or more directions. Where the carriage 113 comprises a plurality of sections, such a feature may be advantageous as it may prevent one of the sections of the carriage 113 from being accessible from at least one of the inside and the outside of the vehicle.

## Claims

1. A vehicle comprising a storage compartment (101) that is movable between a first position in which the storage compartment (101) can be accessed from outside of the vehicle, and a second position in which the storage compartment (101) can be accessed from inside of the vehicle, the vehicle comprising a first access port (109) provided in an outer skin (107) of the vehicle and configured to allow access to the storage compartment (101) from outside of the vehicle when the storage compartment (101) is in the first position, and a second access port (111) configured to allow access to the storage compartment (101) from inside of the vehicle when the storage compartment (101) is in the second position; wherein the storage compartment (101) comprises a carriage (113) that is moveably coupled to a body portion (103) of the vehicle such that it is movable between the first and second positions, and in that the storage compartment further comprises a barrier configured to prevent access through the storage compartment between outside the vehicle and inside the vehicle when the first and second access ports are open;
**characterised in that** the storage compartment (101) comprises a cover (117) having a lock that can be locked and unlocked by virtue of an application on a mobile computing device.

2. A vehicle according to claim 1, wherein the barrier (115) is provided on the carriage (113).

3. A vehicle according to claim 1 or 2, wherein the barrier (115) is configured to partition the storage compartment (101) into at least a first section (123) and a second section (125).

4. A vehicle according to claim 3, wherein the first section (123) of the storage compartment (101) is accessible from the first access port (109) when the carriage (113) is in the first position.

5. A vehicle according to claim 3 or 4, wherein the first section (123) of the storage compartment (101) is accessible from the second access port (111) when the carriage (113) is in the second position.

6. A vehicle according to any of the preceding claims, wherein at least a portion of the storage compartment (101) is refrigerated.

7. A vehicle according to any of the preceding claims, wherein the storage compartment (101) is provided within the body portion (103) of the vehicle.

## Patentansprüche

1. Fahrzeug, umfassend ein Aufbewahrungsfach (101), das zwischen einer ersten Position, in der das Aufbewahrungsfach (101) von außerhalb des Fahrzeugs zugänglich ist, und einer zweiten Position, in der das Aufbewahrungsfach (101) von innerhalb des Fahrzeugs zugänglich ist, bewegbar ist, das Fahrzeug umfassend eine erste Zugangsöffnung (109), die in einer Außenhaut (107) des Fahrzeugs bereitgestellt und konfiguriert ist, um einen Zugang zu dem Aufbewahrungsfach (101) von außerhalb des Fahrzeugs zu ermöglichen, wenn das Aufbewahrungsfach (101) in der ersten Position ist, und eine zweite Zugangsöffnung (111) aufweist, die konfiguriert ist, um einen Zugang zu dem Aufbewahrungsfach (101) von innerhalb des Fahrzeugs zu ermöglichen, wenn das Aufbewahrungsfach (101) in der zweiten Position ist; wobei das Aufbewahrungsfach (101) einen Wagen (113) umfasst, der beweglich mit einem Karosserieteil (103) des Fahrzeugs gekoppelt ist, sodass er zwischen der ersten und der zweiten Position bewegbar ist, und dass das Aufbewahrungsfach ferner eine Barriere umfasst, die konfiguriert ist, um einen Zugang durch das Aufbewahrungsfach zwischen außerhalb des Fahrzeugs und innerhalb des Fahrzeugs zu verhindern, wenn die erste und die zweite Zugangsöffnung offen sind;
**dadurch gekennzeichnet, dass** das Aufbewahrungsfach (101) eine Abdeckung (117) umfasst, die ein Schloss aufweist, das aufgrund einer Anwendung auf einem mobilen Computergerät ver- und entriegelt werden kann.

2. Fahrzeug gemäß Anspruch 1, wobei die Barriere (115) an dem Wagen (113) bereitgestellt ist.

3. Fahrzeug gemäß Anspruch 1 oder 2, wobei die Barriere (115) so konfiguriert ist, um das Aufbewahrungsfach (101) in mindestens einen ersten Abschnitt (123) und einen zweiten Abschnitt (125) zu unterteilen.

4. Fahrzeug gemäß Anspruch 3, wobei der erste Abschnitt (123) des Aufbewahrungsfachs (101) von der ersten Zugangsöffnung (109) aus zugänglich ist, wenn der Wagen (113) in der ersten Position ist.

5. Fahrzeug gemäß Anspruch 3 oder 4, wobei der erste Abschnitt (123) des Aufbewahrungsfachs (101) von der zweiten Zugangsöffnung (111) aus zugänglich ist, wenn der Wagen (113) in der zweiten Position ist.

6. Fahrzeug gemäß einem der vorstehenden Ansprüche, wobei mindestens ein Teil des Aufbewahrungsfachs (101) gekühlt ist.

7. Fahrzeug gemäß einem der vorherigen Ansprüche, wobei das Aufbewahrungsfach (101) innerhalb des Karosserieteils (103) des Fahrzeugs bereitgestellt ist.

## Revendications

1. Un véhicule comprenant un compartiment de stockage (101) qui est mobile entre une première position dans laquelle le compartiment de stockage (101) est accessible depuis l'extérieur du véhicule, et une deuxième position dans laquelle le compartiment de stockage (101) est accessible depuis l'intérieur du véhicule, le véhicule comprenant un premier orifice d'accès (109) prévu dans un revêtement extérieur (107) du véhicule et configuré pour permettre l'accès au compartiment de stockage (101) depuis l'extérieur du véhicule lorsque le compartiment de stockage (101) est dans la première position, et un deuxième orifice d'accès (111) configuré pour permettre l'accès au compartiment de stockage (101) depuis l'intérieur du véhicule lorsque le compartiment de stockage (101) est dans la deuxième position ; dans lequel le compartiment de stockage (101) comprend un chariot (113) qui est couplé de manière mobile à une partie de carrosserie (103) du véhicule de sorte qu'il est mobile entre les première et deuxième positions, et en ce que le compartiment de stockage comprend en outre une barrière configurée pour empêcher l'accès à travers le compartiment de stockage entre l'extérieur du véhicule et l'intérieur du véhicule lorsque les premier et deuxième orifices d'accès sont ouverts ;
**caractérisé en ce que** le compartiment de stockage (101) comprend un couvercle (117) ayant un verrou qui peut être verrouillé et déverrouillé grâce à une application sur un dispositif informatique mobile.

2. Un véhicule selon la revendication 1, dans lequel la barrière (115) est prévue sur le chariot (113).

3. Un véhicule selon la revendication 1 ou 2, dans lequel la barrière (115) est configurée pour diviser le compartiment de stockage (101) en au moins une première section (123) et une deuxième section (125).

4. Un véhicule selon la revendication 3, dans lequel la première section (123) du compartiment de stockage (101) est accessible depuis le premier orifice d'accès (109) lorsque le chariot (113) est dans la première position.

5. Un véhicule selon la revendication 3 ou 4, dans lequel la première section (123) du compartiment de stockage (101) est accessible depuis le deuxième orifice d'accès (111) lorsque le chariot (113) est dans la deuxième position.

6. Un véhicule selon l'une quelconque des revendications précédentes, dans lequel au moins une partie du compartiment de stockage (101) est réfrigérée.

7. Un véhicule selon l'une quelconque des revendications précédentes, dans lequel le compartiment de stockage (101) est prévu dans la partie de carrosserie (103) du véhicule.
